# EUROPEAN PATENT SPECIFICATION

(11) **EP 1 117 291 B1**
(45) Date of publication and mention of the grant of the patent: **23.11.2005**
(21) Application number: 00942564.6
(22) Date of filing: 23.06.2000
(51) Int. Cl.: A01K 5/02

(54) **A FEEDING APPARATUS, INTENDED IN PARTICULAR FOR SUPPLYING CONCENTRATE**
FÜTTERUNGSVORRICHTUNG, INSBESONDERE FÜR ZUFÜHRUNG VON KONZENTRATEN
APPAREIL ALIMENTATEUR, DESTINE EN PARTICULIER A ACHEMINER UN CONCENTRE

(30) Priority: 29.07.1999 NL 1012739
(43) Date of publication of application: 25.07.2001
(73) Proprietor: MAASLAND N.V., 3147 PA Maassluis (NL)
(72) Inventor: FRANSEN, René, NL-3135 ZD Vlaardingen (NL); KAMPS, Albert, Freddie, NL-3146 AA Maassluis (NL)
(74) Representative: Corten, Maurice Jean F.M.
(86) International application number: PCT/NL2000/000444
(87) International publication number: WO 2001/008472

(56) References cited:
- EP-A- 0 595 784
- EP-A- 0 713 643
- WO-A-90/00384
- WO-A-96/05723
- WO-A-99/07214
- GB-A- 590 285
- US-A- 3 935 838
- US-A- 4 665 862
- US-A- 5 150 666

## Description

The invention relates to a feeding apparatus, intended in particular for supplying concentrate, as described in the preamble of claim 1.

Such a feeding apparatus is known from US-A-4,665,862. In this document a timed, automatic feeding apparatus for pets is described. By means of an auger a predetermined amount of dry feed can be measured from a storage bin and furnished to a manger. A feed chute is provided for leading the feed from the auger to the manger. At the end of this feed chute a butterfly valve is incorporated. The valve is operated under the influences of a solenoid and a spring.

In the known feeding apparatus, problems arise in the conveyor channel, especially when the outlet of the conveyor channel is situated above the manger. The problems result from the fact that the air exhaled by the animal during eating penetrates into the conveyor channel and condenses against the wall thereof, so that remains of the concentrate cake against the wall of the conveyor channel, which may lead to clogging and/or bad discharge of the feed via the conveyor channel.

The invention aims at a feeding apparatus in which the above-mentioned drawback is obviated or at least minimized.

In accordance with the invention, this is achieved by the measures described in the characterizing part of claim 1.

The de-aerating means ensure that the exhaled air that penetrates into the conveyor channel is immediately removed, so that it is prevented from condensing against the wall of the conveyor channel. Because a large aperture in the conveyor channel may result in spillage of feed beyond the conveyor channel, according to an inventive feature it is also possible to provide various small perforations in the conveyor channel. Thus, there is created a grid-like perforation pattem. In order to avoid, also in this situation, spillage of feed beyond the conveyor channel, according to a further inventive feature, the perforations are designed as lamellas which extend towards the inside of the conveyor channel. According to another inventive feature said de-aerating means are disposed in an exterior wall of the conveyor channel. For the purpose of removing the exhaled air as quickly as possible, according to a further inventive feature, the preventive and/or de-aerating means are disposed at least near the lower side of the conveyor channel. In the case that various hoppers are disposed above the conveyor channel, the conveyor channel will usually be relatively wide. In order to avoid that the exhaled air rises in the conveyor channel, there is provided a constriction in the conveyor channel. According to an inventive feature, the constriction is situated near the lower side of the conveyor channel, while the de-aerating means are disposed below the constriction. According to an inventive feature, the constriction is constituted by a V-shaped portion.

In accordance with a preferred embodiment of the invention, the de-aerating means further comprise a breather duct which debouches into the conveyor channel. Therefore, the invention also relates to a feeding apparatus, in particular for supplying concentrate, which is provided with at least one hopper for storing the feed and with one metering unit for metering the feed, as well as with at least one conveyor channel via which the feed is poured from the hopper into a manger, characterized in that the feeding apparatus comprises de-aerating means in the form of a breather duct which debouches into the conveyor channel.

By means of the breather duct, like with a chimney, it is possible to create an air flow in the conveyor channel, so that the exhaled air is removed. According to a further inventive feature, the lower end of the breather duct debouches near the place where the feed is poured into the manger. According to another inventive feature, it is also possible forcibly to remove the air exhaled by the animal. To that end, according to an inventive feature, the de-aerating means comprise air forcing means with the aid of which an air flow is forcibly created in the conveyor channel and/or the breather duct and/or the manger. In a simple embodiment of the invention, the air forcing means comprise a ventilator. In order to save energy, according to an inventive feature, the air forcing means are automatically activated when the detection means detect that an animal is located in the vicinity of the feeding apparatus.

In accordance with again another preferred embodiment of the invention, the preventive means further comprise automatic supply means which are disposed near the lower end of the conveyor channel and, in the situation of proportional metering, release the conveyor channel just before metering or during metering the feed and subsequently close same, or, in the situation of continuous metering, release the conveyor channel in such a manner that the feed flows exactly through the released opening. In the former case, each time when metering is actuated temporarily, the valve is opened and closed quickly by the operating means, such that the channel is only released for discharging the feed. In the latter case, the valve is opened or closed to a larger extent, depending on the amount of feed which is brought into the conveyor channel per unit of time by the metering unit. Thus, the metered feed closes the opening of the conveyor channel, so that the exhaled air is prevented from penetrating into the conveyor channel. According to a further inventive feature, the automatic supply means comprise a non-return valve or a freely rotatable cam wheel. According to another inventive feature, the non-return valve is controlled by means of a spring under preferably adjustable spring action. According to again another inventive feature, the supply means may also comprise a drivable supply member. According to the invention, said supply member may comprise a brush or an auger or a cam wheel.

In accordance with another preferred embodiment of the invention, the preventive means, in particular the cleaning means, further comprise a sweeping device by means of which the wall of the conveyor channel is swept. Then, the sweeping device is arranged in the conveyor channel in such a manner that condensation and/or feed remains that may be present are swept by the sweeping device from the conveyor channel to the manger. In an embodiment of the invention, the sweeping device comprises at least one drivable wiper device by means of which at least part of the wall of the conveyor channel is cleaned. In again another embodiment of the invention, the sweeping device comprises a brush which is drivable and/or movable along the wall of the conveyor channel.

According to another inventive feature, the feeding apparatus, in particular the conveyor channel, is provided with detection means which supply a signal when the conveyor channel is contaminated and/or clogged. The signal supplied by the detection means may serve as a control signal for the cleaning means and/or as a warning signal for the supervisor.

The invention also relates to an implement for automatically milking animals, such as cows, provided with a milking parlour with a milking installation and a feeding apparatus as described in the foregoing. According to a further inventive feature, the implement comprises a milking robot by means of which teat cups are automatically connected to the teats of an animal to be milked.

The invention will now be explained in further detail with reference to the accompanying drawings.
Figure 1 is a cross-sectional side view of a first embodiment of a feeding apparatus according to the invention;
Figure 2 is a second embodiment of a feeding apparatus according to the invention;
Figure 3 is a third embodiment of a feeding apparatus according to the invention;
Figure 4 is a fourth embodiment of a feeding apparatus according to the invention;
Figure 5 is a fifth embodiment of a feeding apparatus according to the invention, and
Figure 6 is a sixth embodiment of a feeding apparatus according to the invention.

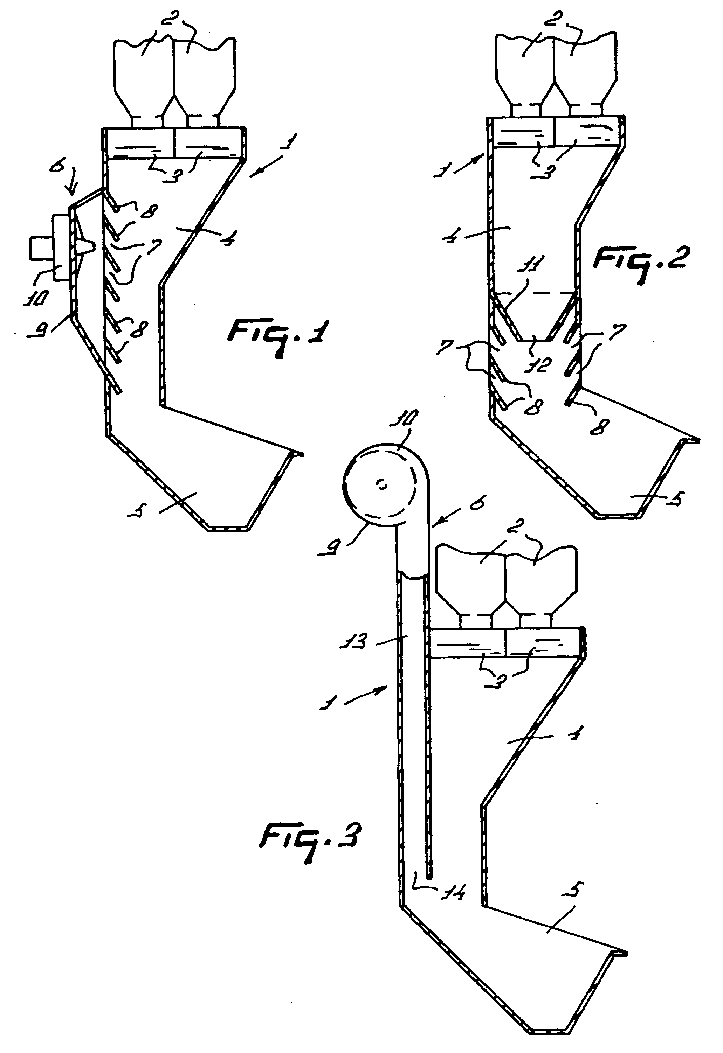

Figure 1 is a cross-section of a feeding apparatus 1 which, in the present embodiment, is designed as an apparatus for supplying concentrate. The feeding apparatus 1 comprises two hoppers 2 in which two different sorts of concentrate can be stored. Near the lower end of each hopper 2 there is provided a metering unit 3 by means of which continuously or periodically concentrate can be poured from the hopper into a conveyor channel 4. The outlet of the conveyor channel 4 is situated above a manger 5. In an exterior wall of the conveyor channel 4 there are disposed de-aerating means 6. The de-aerating means 6 are constituted by perforations 7 each of which is covered by a lamella 8. The perforations 7 may have any desired shape and may be constituted e.g. by a round or a slotted hole. For the purpose of removing the air exhaled by an animal still more efficiently, in the present embodiment the de-aerating means 6 comprise air forcing means 9. The air forcing means 9 are constituted by a ventilator 10. It will be obvious that it is also possible to construct the de-aerating means 6 without the air forcing means 9.

Figure 2 shows a second embodiment of a feeding apparatus 1 according to the invention, in which parts corresponding to those of the first embodiment are indicated by the same reference numerals. In the second embodiment of the invention, the conveyor channel 4 is narrowed because of having near its lower side a V-shaped portion 11. The opening 12 near the lower side of the V-shaped portion 11 of the conveyor channel 4 is sufficient to discharge the maximum amount metered by the metering unit 3. As shown in Figure 2, the perforations 7 are provided below the V-shaped portion 11 of the conveyor channel 4. Thus it is achieved that the air exhaled by the animal does hardly, if at all, arrive in the upper part of the conveyor channel 4, but only in the lower part thereof where it is immediately removed via the perforations, while that part of the conveyor channel 4 does not come into contact with the metered concentrate.

Figure 3 shows a third embodiment of a feeding apparatus 1 according to the invention, in which parts corresponding to those of the previous embodiments are indicated by the same reference numerals. In the third embodiment of the invention, the de-aerating means 6 comprise a breather duct 13 whose lower end 14 debouches near the lower side of the conveyor channel 4. The breather duct 13 is also provided with air forcing means 9 which comprise a ventilator 10. However, it will be obvious that it is also possible to remove air exhaled by the animal by means of the breather duct 13 without using said air forcing means.

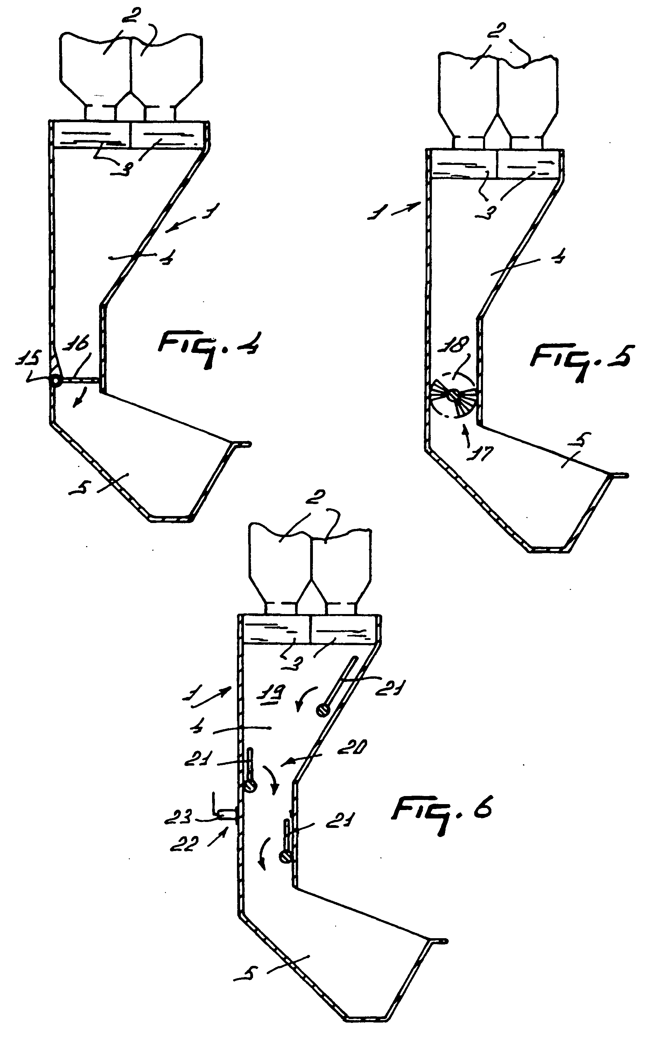

Figure 4 shows a fourth embodiment of a feeding apparatus 1 according to the invention, in which parts corresponding to those of the previous embodiments are indicated by the same reference numerals. In the fourth embodiment of the invention, near the lower side of the conveyor channel 4, there are disposed automatic supply means 15 releasing the conveyor channel 4 proportionally, only when feed is poured into the conveyor channel 4. In the present embodiment, the automatic supply means 15 comprise a non-return valve 16 which is capable of moving downwards against spring action thus allowing the metered concentrate to fall into the manger 5.

Figure 5 shows a fifth embodiment of a feeding apparatus 1 according to the invention, in which parts corresponding to those of the previous embodiments are indicated by the same reference numerals. In the fifth embodiment of the invention, the automatic supply means 15 comprise a motor-drivable supply member 17. In the present embodiment, the drivable supply member 17 is constituted by a brush 18. However, it will be obvious that instead of a brush 18 there may also be applied an auger or a cam wheel. In the case that a cam wheel is applied it is also possible to apply a freely rotatable cam wheel. It will be obvious that, when the metering units 3 are actuated, the drivable supply member 17 is actuated as well.

Figure 6 shows a sixth embodiment of a feeding apparatus 1 according to the invention, in which parts corresponding to those of the previous embodiments are indicated by the same reference numerals. In the sixth embodiment of the invention the feeding apparatus 1 comprises cleaning means 19 with the aid of which the conveyor channel 4 is cleaned. In the present embodiment, the cleaning means 19 are constituted by a sweeping device 20. The sweeping device 20 comprises a number of motor-drivable wipers 21 which are disposed against the walls of the conveyor channel 4. The wipers 21 are arranged in such a manner that condensation and/or dirt from the conveyor channel 4 is/are supplied to the manger 5.

In the sixth embodiment of the invention there are further disposed detection means 22 which supply a signal when the walls of the conveyor channel 4 are contaminated and/or the conveyor channel 4 is clogged. The detection means 22 comprise a sensor 23 which is disposed in the conveyor channel 4 and by means of which the wall of the conveyor channel 4 can be examined. The sensor 23 may be an optic or an acoustical or even a mechanical sensor. It will be obvious that the detection means 22 may also be used in the other embodiments. The same applies for the cleaning means 19.

## Claims

1. A feeding apparatus (1), intended in particular for supplying concentrate, provided with at least one hopper (2) for storing the feed and provided with at least one conveyor channel (4) via which the feed from the hopper (2) is poured into a manger (5) as well as provided with at least one metering unit (3) for metering the feed and being provided near the lower end of said hopper (2), by means of said metering unit (3) continuously or periodically feed can be poured from the hopper (2) into the conveyor channel (4), the feeding apparatus further comprises preventive means (6, 15, 19) with the aid of which the conveyor channel (4) is at least prevented from being contaminated and/or clogged, wherein the preventive means comprise de-aerating means (6) with the aid of which the conveyor channel (4) is de-aerated, **characterized in that** the de-aerating means (6) are constituted by at least one perforation (7) in the conveyor channel (4).

2. A feeding apparatus as claimed in claim 1, **characterized in that** various perforations (7) are provided in the conveyor channel (4).

3. A feeding apparatus as claimed in claim 2, **characterized in that** the conveyor channel (4) is provided with a grid-like perforation pattern.

4. A feeding apparatus as claimed in claim 3, **characterized in that** the perforations (7) are designed as lamellas (8) which extend towards the inside of the conveyor channel (4).

5. A feeding apparatus as claimed in any one of the preceding claims, **characterized in that** said de-aerating means (6) are disposed in an exterior wall of the conveyor channel (4).

6. A feeding apparatus as claimed in any one of the preceding claims, **characterized in that** the preventive and/or de-aerating means are disposed at least near the lower side of the conveyor channel.

7. A feeding apparatus as claimed in any one of the preceding claims, **characterized in that** there is provided a constriction (11) in the conveyor channel (4).

8. A feeding apparatus as claimed in claim 7, **characterized in that** the constriction (11) is provided above the de-aerating means (6).

9. A feeding apparatus as claimed in claim 7 or 8, **characterized in that** the constriction (11) is constituted by a V-shaped portion.

10. A feeding apparatus as claimed in any one of the preceding claims, **characterized in that** the de-aerating means (6) comprise a breather duct (13) which debouches into the conveyor channel (4).

11. A feeding apparatus as claimed in claim 10, **characterized in that** the lower end of the breather duct (13) debouches near the place where the feed is poured into the manger (5).

12. A feeding apparatus as claimed in any one of the preceding claims, **characterized in that** the de-aerating means (6) comprise air forcing means (9) with the aid of which an air flow is forcibly created in the conveyor channel (4) and/or the breather duct (13) and/or the manger (5).

13. A feeding apparatus as claimed in claim 12, **characterized in that** the air forcing means (9) comprise a ventilator (10).

14. A feeding apparatus as claimed in claim 12 or 13, **characterized in that** the air forcing means (9) are automatically activated when there is detected with the aid of detection means that an animal is located in the vicinity of the feeding apparatus (1).

15. ' A feeding apparatus as claimed in any one of the preceding claims, **characterized in that** the preventive means comprise automatic supply means (15) which are disposed near the lower end of the conveyor channel (4) and, in the situation of proportional metering, release the conveyor channel (4) just before metering or during metering of the feed and subsequently close same, or, in the situation of a continuous metering, release the conveyor channel (4) in such a manner that the feed flows exactly through the released opening.

16. A feeding apparatus as claimed in claim 15, **characterized in that** the automatic supply means (15) comprise a non-return valve (16) or a freely rotatable cam wheel.

17. A feeding apparatus as claimed in claim 16, **characterized in that** the non-return valve (16) is controlled by means of a spring under preferably adjustable spring action.

18. A feeding apparatus as claimed in any one of claims 15 to 17, **characterized in that** the automatic supply means (15) comprise a drivable supply member (17).

19. A feeding apparatus as claimed in claim 18, **characterized in that** the drivable supply member (17) comprises a brush (18) or an auger or a cam wheel.

20. A feeding apparatus as claimed in any one of the preceding claims, **characterized in that** the preventive means and in particular the cleaning means (19) comprise a sweeping device (20) by means of which the wall of the conveyor channel (4) is swept.

21. A feeding apparatus as claimed in claim 20, **characterized in that** the sweeping device (20) comprises at least one drivable wiper device (20, 21) by means of which at least part of the wall of the conveyor channel (4) is cleaned.

22. A feeding apparatus as claimed in claim 20 or 21, **characterized in that** the sweeping device (20) comprises a brush which is drivable and/or movable along the wall of the conveyor channel.

23. A feeding apparatus as claimed in any one of the preceding claims, **characterized in that** the feeding apparatus (1) is provided with detection means (22) which supply a signal when the conveyor channel (4) is contaminated and/or clogged.

24. An implement for automatically milking animals, such as cows, comprising a milking parlour with a milking installation and a feeding apparatus as described in any one of claims 1 to 23.

25. An implement as claimed in claim 24, **characterized in that** the implement comprises a milking robot.

## Patentansprüche

1. Fütterungsvorrichtung (1), insbesondere zum Zuführen von Kraftfutter, mit mindestens einem Vorratsbehälter (2) zur Aufnahme von Futter und mindestens einem Förderkanal (4), über den das Futter aus dem Vorratsbehälter (2) in einen Futtertrog (5) geleitet wird, sowie mit mindestens einer Dosiereinheit (3) zum Dosieren des Futters, die nahe dem unteren Ende des Vorratsbehälters (2) angeordnet ist, wobei mit Hilfe der Dosiereinheit (3) kontinuierlich oder in regelmäßigen Abständen Futter aus dem Vorratsbehälter (2) in den Förderkanal (4) geleitet werden kann, wobei die Fütterungsvorrichtung ferner Schutzvorrichtungen (6, 15, 19) umfaßt, mittels derer zumindest verhindert wird, daß der Förderkanal (4) verunreinigt und/oder verstopft wird, wobei die Schutzvorrichtungen eine Entlüftungsvorrichtung (6) umfassen, mittels der der Förderkanal (4) entlüftet wird,
**dadurch gekennzeichnet, daß** die Entlüftungsvorrichtung (6) durch mindestens eine Perforation (7) in dem Förderkanal (4) gebildet ist.

2. Fütterungsvorrichtung nach Anspruch 1,
**dadurch gekennzeichnet, daß** mehrere Perforationen (7) in dem Förderkanal (4) vorgesehen sind.

3. Fütterungsvorrichtung nach Anspruch 2,
**dadurch gekennzeichnet, daß** der Förderkanal (4) mit einem gitterartigen Perforationsmuster versehen ist.

4. Fütterungsvorrichtung nach Anspruch 3,
**dadurch gekennzeichnet, daß** die Perforationen (7) als Lamellen (8) ausgeführt sind, die sich ins Innere des Förderkanals (4) erstrecken.

5. Fütterungsvorrichtung nach einem der vorhergehenden Ansprüche,
**dadurch gekennzeichnet, daß** die Entlüftungsvorrichtung (6) an einer Außenwand des Förderkanals (4) angeordnet ist.

6. Fütterungsvorrichtung nach einem der vorhergehenden Ansprüche,
**dadurch gekennzeichnet, daß** die Schutz- und/oder Entlüftungsvorrichtung zumindest nahe der Unterseite des Förderkanals angeordnet ist.

7. Fütterungsvorrichtung nach einem der vorhergehenden Ansprüche,
**dadurch gekennzeichnet, daß** eine Verengung (11) in dem Förderkanal (4) vorgesehen ist.

8. Fütterungsvorrichtung nach Anspruch 7,
**dadurch gekennzeichnet, daß** die Verengung (11) über der Entlüftungsvorrichtung (6) angeordnet ist.

9. Fütterungsvorrichtung nach Anspruch 7 oder 8,
**dadurch gekennzeichnet, daß** die Verengung (11) durch einen V-förmigen Abschnitt gebildet ist.

10. Fütterungsvorrichtung nach einem der vorhergehenden Ansprüche,
**dadurch gekennzeichnet, daß** die Entlüftungsvorrichtung (6) eine Entlüftungsleitung (13) umfaßt, die in den Förderkanal (4) mündet.

11. Fütterungsvorrichtung nach Anspruch 10,
**dadurch gekennzeichnet, daß** das untere Ende der Entlüftungsleitung (13) nahe der Stelle mündet, an der das Futter in den Futtertrog (5) geleitet wird.

12. Fütterungsvorrichtung nach einem der vorhergehenden Ansprüche,
**dadurch gekennzeichnet, daß** die Entlüftungsvorrichtung (6) eine Luftstromerzeugungsvorrichtung (9) umfaßt, mittels der künstlich ein Luftstrom in dem Förderkanal (4) und/oder der Entlüftungsleitung (13) und/oder dem Futtertrog (5) erzeugt wird.

13. Fütterungsvorrichtung nach Anspruch 12,
**dadurch gekennzeichnet, daß** die Luftstromerzeugungsvorrichtung (9) einen Ventilator (10) umfaßt.

14. Fütterungsvorrichtung nach Anspruch 12 oder 13,
**dadurch gekennzeichnet, daß** die Luftstromerzeugungsvorrichtung (9) automatisch aktiviert wird, wenn mit Hilfe der Ermittlungsvorrichtung festgestellt wird, daß sich ein Tier in der Nähe der Fütterungsvorrichtung (1) befindet.

15. Fütterungsvorrichtung nach einem der vorhergehenden Ansprüche,
**dadurch gekennzeichnet, daß** die Schutzvorrichtung eine automatische Zuführvorrichtung (15) umfaßt, die nahe dem unteren Ende des Förderkanals (4) angeordnet ist und bei proportionaler Dosierung den Förderkanal (4) unmittelbar vor der Dosierung oder während der Dosierung des Futters freigibt und anschließend verschließt oder bei kontinuierlicher Dosierung den Förderkanal (4) in der Weise freigibt, daß das Futter genau durch die freigegebene Öffnung strömt.

16. Fütterungsvorrichtung nach Anspruch 15,
**dadurch gekennzeichnet, daß** die automatische Zuführvorrichtung (15) ein Rückschlagventil (16) oder ein frei drehbares Nockenrad umfaßt.

17. Fütterungsvorrichtung nach Anspruch 16,
**dadurch gekennzeichnet, daß** das Rückschlagventil (16) mittels einer Feder mit vorzugsweise einstellbarer Federkraft gesteuert wird.

18. Fütterungsvorrichtung nach einem der Ansprüche 15 bis 17,
**dadurch gekennzeichnet, daß** die automatische Zuführvorrichtung (15) ein antreibbares Zuführglied (17) umfaßt.

19. Fütterungsvorrichtung nach Anspruch 18,
**dadurch gekennzeichnet, daß** das antreibbare Zuführglied (17) eine Bürste (18) oder eine Schnecke oder ein Nockenrad umfaßt.

20. Fütterungsvorrichtung nach einem der vorhergehenden Ansprüche,
**dadurch gekennzeichnet, daß** die Schutzvorrichtung und insbesondere die Reinigungsvorrichtung (19) eine Abstreifvorrichtung (20) umfaßt, mittels der die Wand des Förderkanals (4) abgestreift wird.

21. Fütterungsvorrichtung nach Anspruch 20,
**dadurch gekennzeichnet, daß** die Abstreifvorrichtung (20) mindestens eine antreibbare Wischvorrichtung (20, 21) umfaßt, mittels der zumindest ein Teil der Wand des Förderkanals (4) gereinigt wird.

22. Fütterungsvorrichtung nach Anspruch 20 oder 21,
**dadurch gekennzeichnet, daß** die Abstreifvorrichtung (20) eine Bürste umfaßt, die antreibbar und/oder über die Wand des Förderkanals bewegbar ist.

23. Fütterungsvorrichtung nach einem der vorhergehenden Ansprüche,
**dadurch gekennzeichnet, daß** die Fütterungsvorrichtung (1) mit einer Ermittlungsvorrichtung (22) versehen ist, die ein Signal liefert, wenn der Förderkanal (4) verunreinigt und/oder verstopft ist.

24. Anlage zum automatischen Melken von Tieren, wie z. B. Kühen, die einen Melkstand mit einer Melkvorrichtung und einer Fütterungsvorrichtung nach einem der Ansprüche 1 bis 23 umfaßt.

25. Anlage nach Anspruch 24,
**dadurch gekennzeichnet, daß** die Anlage einen Melkroboter umfaßt.

## Revendications

1. Appareil alimentateur (1), destiné en particulier à acheminer un concentré, muni d'au moins une trémie (2) destinée à stocker l'alimentation et muni d'un moins un canal d'acheminement (4) via lequel l'alimentation provenant de la trémie (2) est versée dans une auge(5), et également muni d'au moins une unité de dosage (3) destinée à doser l'alimentation et prévue à proximité de l'extrémité inférieure de ladite trémie (2), ladite unité de dosage (3) permettant de verser l'alimentation de manière continue ou périodique à partir de la trémie (2) dans le canal d'acheminement (4), l'appareil alimentateur comprenant en outre des moyens de prévention (6, 15, 19) à l'aide desquels on empêche au moins le canal d'acheminement (4) d'être contaminé et/ou bouché, dans lequel les moyens de prévention comprennent des moyens d'élimination de l'air (6) à l'aide desquels l'air est éliminé du canal d'acheminement (4), **caractérisé en ce que** les moyens d'élimination de l'air (6) se composent d'au moins une perforation (7) dans le canal d'acheminement (4).

2. Appareil alimentateur selon la revendication 1, **caractérisé en ce que** différentes perforations sont prévues dans le canal d'acheminement (4).

3. Appareil alimentateur selon la revendication 2, **caractérisé en ce que** le canal d'acheminement (4) est muni d'un motif de perforation ressemblant à une grille.

4. Appareil alimentateur selon la revendication 3, **caractérisé en ce que** les perforations (7) sont conçues sous la forme de lamelles (8) qui s'étendent vers l'intérieur du canal d'acheminement (4).

5. Appareil alimentateur selon l'une quelconque des revendications précédentes, **caractérisé en ce que** lesdits moyens d'élimination de l'air (6) sont disposés dans une paroi extérieure du canal d'acheminement (4).

6. Appareil alimentateur selon l'une quelconque des revendications précédentes, **caractérisé en ce que** les moyens de prévention et/ou les moyens d'élimination de l'air sont disposés au moins à proximité de la face inférieure du canal d'acheminement.

7. Appareil alimentateur selon l'une quelconque des revendications précédentes, **caractérisé en ce qu'**il est prévu un étranglement (11) dans le canal d'acheminement (4).

8. Appareil alimentateur selon la revendication 7, **caractérisé en ce que** l'étranglement (11) est prévu au-dessus des moyens d'élimination de l'air (6).

9. Appareil alimentateur selon la revendication 7 ou 8, **caractérisé en ce que** l'étranglement (11) se compose d'une partie en forme de V.

10. Appareil alimentateur selon l'une quelconque des revendications précédentes, **caractérisé en ce que** les moyens d'élimination de l'air (6) comprennent un conduit reniflard (13) qui débouche dans le canal d'acheminement (4).

11. Appareil alimentateur selon la revendication 10, **caractérisé en ce que** l'extrémité inférieure du conduit reniflard (13) débouche à proximité de l'endroit auquel l'alimentation est versée dans l'auge (5).

12. Appareil alimentateur selon l'une quelconque des revendications précédentes, **caractérisé en ce que** les moyens d'élimination de l'air (6) comprennent des moyens de forçage d'air (9) à l'aide desquels un flux d'air est créé de force dans le canal d'acheminement (4) et/ou le conduit reniflard (13) et/ou l'auge (5). '

13. Appareil alimentateur selon la revendication 12, **caractérisé en ce que** les moyens de forçage d'air (9) comprennent un ventilateur (10).

14. Appareil alimentateur selon la revendication 12 ou 13, **caractérisé en ce que** les moyens de forçage d'air (9) sont activés automatiquement lorsqu'on détecte, à l'aide de moyens de détection, qu'un animal se trouve au voisinage de l'appareil alimentateur (1).

15. Appareil alimentateur selon l'une quelconque des revendications précédentes, **caractérisé en ce que** les moyens de prévention comprennent des moyens d'alimentation automatique (15) qui sont disposés à proximité de l'extrémité inférieure du canal d'acheminement (4) et, dans le cas d'un dosage proportionnel, dégagent le canal d'acheminement (4) juste avant le dosage ou pendant le dosage de l'alimentation et ferment celui-ci par la suite, ou, dans le cas d'un dosage continu, dégagent le canal d'acheminement (4) de telle sorte que l'alimentation s'écoule exactement à travers l'ouverture dégagée.

16. Appareil alimentateur selon la revendication 15, **caractérisé en ce que** les moyens d'alimentation automatique (15) comprennent un clapet de non-retour (16) ou une roue à cames pouvant tourner librement.

17. Appareil alimentateur selon la revendication 16, **caractérisé en ce que** le clapet de non-retour (16) est commandé au moyen d'un ressort sous l'action d'un ressort de préférence réglable.

18. Appareil alimentateur selon l'une quelconque des revendications 15 à 17, **caractérisé en ce que** les moyens d'alimentation automatiques (15) comprennent un élément d'alimentation pouvant être entraîné (17).

19. Appareil alimentateur selon la revendication 18, **caractérisé en ce que** l'élément d'alimentation pouvant être entraîné (17) comprend une brosse (18) ou une auge ou une roue à cames.

20. Appareil alimentateur selon l'une quelconque des revendications précédentes, **caractérisé en ce que** les moyens de prévention et en particulier les moyens de nettoyage (19) comprennent un dispositif de balayage (20) au moyen duquel la paroi du canal d'acheminement (4) est balayée.

21. Appareil alimentateur selon la revendication 20, **caractérisé en ce que** le dispositif de balayage (20) comprend au moins un dispositif essuyeur pouvant être entraîné (20, 21) au moyen duquel au moins une partie de la paroi du canal d'acheminement (4) est nettoyée.

22. Appareil alimentateur selon la revendication 20 ou 21, **caractérisé en ce que** le dispositif de balayage (20) comprend une brosse qui peut être entraînée et/ou déplacée le long de la paroi du canal d'acheminement.

23. Appareil alimentateur selon l'une quelconque des revendications précédentes, **caractérisé en ce que** l'appareil alimentateur (1) est muni de moyens de détection (22) qui fournissent un signal lorsque le canal d'acheminement (4) est contaminé et/ou bouché.

24. Dispositif servant à traire automatiquement des animaux, tels que des vaches, comprenant une salle de traite avec une installation de traite et un appareil alimentateur selon l'une quelconque des revendications 1 à 23.

25. Dispositif selon la revendication 24, **caractérisé en ce que** le dispositif comprend un robot de traite.
